# EUROPÄISCHE PATENTSCHRIFT

(11) **EP 2 024 140 B1**
(45) Veröffentlichungstag und Bekanntmachung des Hinweises auf die Patenterteilung: **04.08.2010**
(21) Anmeldenummer: 07725746.7
(22) Anmeldetag: 01.06.2007
(51) Int. Cl.: B25D 17/26, F16N 13/16, F04B 9/105, F16N 11/10, F16N 13/22, F16N 25/02

(54) **SELBSTTÄTIGE SCHMIERPUMPE MIT DOPPELT WIRKENDEM ANTRIEBSKOLBEN**
AUTOMATIC LUBRICATING PUMP WITH DOUBLE-ACTING DRIVE PISTON
POMPE À LUBRIFIANT AUTOMATIQUE AVEC PISTON D'ENTRAÎNEMENT À DOUBLE ACTION

(30) Priorität: 02.06.2006 DE 102006026274
(43) Veröffentlichungstag der Anmeldung: 18.02.2009
(73) Patentinhaber: SKF Lubrication Systems Germany AG, 12277 Berlin (DE)
(72) Erfinder: SATTELBERGER, Paul, 68799 Reilingen (DE); SAAM, Werner, 68794 Oberhausen-Rheinhausen (DE)
(74) Vertreter: Grünecker, Kinkeldey, Stockmair & Schwanhäusser Anwaltssozietät
(86) Internationale Anmeldenummer: PCT/EP2007/004866
(87) Internationale Veröffentlichungsnummer: WO 2007/140935

(56) Entgegenhaltungen:
- EP-A- 0 212 369
- EP-A- 0 244 182
- EP-A- 1 321 245
- WO-A-87/06653
- DE-A1- 1 528 573
- DE-A1- 10 118 284
- FR-A- 2 188 785
- US-B1- 6 296 078

## Beschreibung

Die Erfindung betrifft eine selbsttätige Schmierpumpe, die an eine Druckleitung eines Hydraulikkreises mit wiederholt aufsteigendem oder konstantem Hydraulikdruck einer Maschine, wie einer Baumaschine mit einem Hydraulikhammer, anschließbar ausgestaltet ist, mit einem vom Hydraulikkreis antreibbar ausgebildeten Antriebskolben und einem mit dem Antriebskolben bewegungsübertragend verbundenen Förderkolben, der an eine mit Schmierstoff befüllbare, mit wenigstens einem Schmierstoffauslass der selbsttätigen Schmierpumpe verbundene Förderkammer grenzt.

Die Erfindung betrifft ferner ein Verfahren zum Schmieren wenigstens einer Schmierstelle von Maschinen mit eigenem Hydraulikkreis, wie Baumaschinen, wobei ein Antriebskolben vom wiederholt ansteigenden oder konstantem Hydraulikdruck in einer Druckleitung des Hydraulikkreises hin- und hergehend bewegt und die Bewegung des Antriebskolbens an einen mit dem Antriebskolben gekoppelten Förderkolben übertragen wird, der Schmierstoff in Richtung der wenigstens einen Schmierstelle fördert.

Aus dem Stand der Technik ist eine Reihe von unterschiedlich ausgestalteten selbsttätigen Schmierpumpen bekannt, die zur Schmierung von Werkzeugen einer Baumaschine, insbesondere von hydraulischen Schlagwerkzeugen wie Hydraulikhämmern eingesetzt werden und selbsttätig, also ohne eigene Energiequelle vom Hydraulikkreis der Baumaschine, angetrieben sind. Die Hydraulikkreise für Schlagwerkzeuge zeichnen sich dadurch aus, dass der Hydraulikdruck wiederholt ansteigt, was durch Zwischenschalten eines periodisch betätigten Umschaltventils erreicht wird. Der Wechsel zwischen Druckanstieg und Druckabfall erzeugt die Schlagbewegung des Schlagwerkzeugs. Die Schmierung von solchen Schlagwerkzeugen, wie sie beispielsweise in der DE-A-34 43 542 oder DE-A-198 03 449 beschrieben sind, ist problematisch, weil aufgrund der hohen auf das Schlagwerkzeug wirkenden Kräfte und der meist staubigen Umgebung Schmierstoffe mit hohem Festkörperanteil und unter hohem Schmierdruck verwendet werden müssen.

Bei der DE-A-39 39 785 werden diese Probleme bei der Schmierung dadurch gelöst, dass der Förderdruck, mit dem das Schmierfett zu einer Schmierstelle geleitet wird, von dem in der Regel hohen Betriebsdruck des Hydraulikkreises erzeugt wird. Liegt der Hydraulikdruck in Betriebspausen nicht an, so wird der Förderkolben über eine Rückstellfeder in eine Ausgangslage bewegt. Aufgrund des hochviskosen Schmierfetts reicht die Rückstellkraft der Rückstellkraft der Rückstellfeder nicht aus, damit der Förderkolben selbsttätig Schmierfett ansaugt. Daher weist der Schmierstoffvorrat eine Druckfeder auf, um das Schmierfett unter Druck zum Förderkolben zu bewegen und eine Förderkammer zu befüllen. Bei der Beaufschlagung mit dem Betriebsdruck führt der Förderkolben eine einzelne Förderbewegung aus. Um zu vermeiden, dass bei längerer Betriebsdauer der Förderkolben nur einmal betätigt wird, kann ein batteriebetriebenes Steuergerät vorgesehen sein, das beginnend jeweils mit dem Inbetriebsetzen des Schlagwerks in aufeinanderfolgenden Zeitpunkten mit vorwählbarem Zeitabstand ein Sperrventil öffnet, um den Förderkolben mehrmals mit dem Betriebsdruck zu beaufschlagen und entsprechend die Förderbewegung mehrfach durchzuführen.

Die DE-A-197 04 958 befasst sich mit einer Ansaug- und Pumpeinheit, die Lufteinschlüsse auch bei Verwendung von Schmierfett mit hohem oder sehr hohem Feststoffgehalt selbsttätig entlüften kann. Hierzu ist das von einem Förderkolben im Betrieb überstrichene Volumen in einen Förderabschnitt, der mit einer von einem Rückschlagventil verschlossenen Förderleitung zur Schmierstelle verbunden ist, und einen Verdichtungsabschnitt, in dem eine Entlüftungsleitung mündet, unterteilt. Lufteinschlüsse im Schmiermittel führen aufgrund ihrer Kompressibilität dazu, dass sich der Förderkolben über den Förderabschnitt bewegt, ohne dass das Rückschlagventil die Förderleitung öffnet. Überstreicht der Förderkolben den Verdichtungsabschnitt, wird das Schmiermittel mit den Lufteinschlüssen durch die Entlüftungsbohrung gedrückt. Wie bei der Schmierpumpe der DE-A-39 39 785 arbeitet auch der Förderkolben der DE-A-197 04 958 gegen eine Rückstellfeder.

Der Nachteil der Schmierpumpen, wie sie in der DE-A-39 39 785 und der DE-A-197 04 958 beschrieben sind, liegt darin, dass die Förderkolben jeweils bei Beaufschlagung mit dem Betriebsdruck einen vollständigen Förderhub ausführen. Deswegen müssen bei einem kontinuierlichen Betrieb des Schlagwerkzeugs über einen längeren Zeitraum besondere Maßnahmen ergriffen werden, um den Förderkolben mehrfach zu betätigen. Eine solche Maßnahme ist das oben geschilderte Steuergerät der DE-A-39 39 785. Dies ist allerdings eine aufwändige und fehlerträchtige Lösung.

Eine weitere Maßnahme, um eine kontinuierliche Schmierung während der gesamten Betriebszeit des Schlagwerkzeugs sicherzustellen, ist in der DE-U-20 118 920 beschrieben. Gemäß dieser Lösung befindet sich in Bypassleitung des Hydraulikkreis ein Progressiwerteiler, der einen Schaltkolben periodisch aus- und einfährt. Gegen den Schaltkolben ist unter Federspannung ein Flanschansatz einer mit einer Welle verbundenen Einwegkupplung gedrückt. Der Flanschansatz folgt der Bewegung des Schaltkolbens, während die Einwegkupplung ein Rückdrehen der Welle verhindert, wenn der Schaltkolben eingefahren wird. Auf diese Weise wird schrittweise die Welle in eine Drehrichtung bewegt und ein auf der Welle sitzender Exzenter gedreht, der ein Pumpenelement antreibt.

Auf den Progressivverteiler der DE-U-20 118 920 kann gemäß der Weiterentwicklung der DE-U-202 06 050 verzichtet werden, wenn der Flanschansatz direkt über einen Betätigungsarm vom Schlagwerk betätigt wird.

Bei der EP-A-1 112 820 wird die Einwegkupplung durch ein sich mit der Vibrationsbewegung des Schlagwerkzeugs bewegendes Gewicht angetrieben.

In der EP-A-1 626 225 ist eine Schmierstoffpumpe für ein Fahrzeug, eine Bau-, Land- oder Industriemaschine gezeigt. Die Schmierstoffpumpe schaltet selbsttätig von einem Fördermodus, bei dem der Förderkolben Schmierstoff an eine Schmierstelle fördert, in einen Befüllmodus um, wenn ein Schmierstoffaufnahmeraum unter Druck befüllt wird. Zum Umschalten werden ein druckfluidseitiger und ein schmierstoffseitiger Umsteuerkolben verwendet.

Bei der automatischen Schmiereinrichtung der EP-A-1 643 123 wird ein Hydraulikmotor verwendet, der über einen Exzenter eine Kolbenpumpe antriebt.

Schließlich sei auf die DE-U-20 2004 008 752 verwiesen, gemäß der eine Differenzialkolbenanordnung verwendet werden kann, um den hohen Hydraulikdruck in einen zur Schmierung geeigneten Förderdruck umzuwandeln.

Aus dem Stand der Technik geht hervor, dass eine selbsttätige, kontinuierliche Förderung von Schmierstoff während des Betriebs des Schlagwerkzeugs bislang nur mit einem hohen konstruktiven Aufwand zu erreichen war. Die bisherigen Lösungen weisen zudem Verschleißteile, beispielsweise in Form von Federn und Einwegkupplungen auf, die im Dauerbetrieb leicht versagen können und die Lebensdauer der Schmierstoffpumpe begrenzen oder kurze Wartungsintervalle erfordern.

Der Erfindung liegt daher die Aufgabe zugrunde, die selbsttätigen Schmierpumpen für den Einsatz in hydraulischen Schlagwerkzeugen so zu verbessern, dass eine kontinuierliche Schmierung während des Betriebs des Schlagwerkzeugs bei gleichzeitig hoher Lebensdauer der Schmierpumpe sichergestellt werden kann.

Diese Aufgabe wird erfindungsgemäß für eine Schmierpumpe der eingangs genannten Art dadurch gelöst, dass der Antriebskolben doppelt wirkend mit zwei Antriebskammern ausgestaltet ist und dass ein in den Hydraulikkreis schaltbares und vom Hydraulikdruck betätigbares, einen Progressivverteiler umfassendes Umschaltorgan vorgesehen ist, durch welches im Betrieb die Antriebskammern wechselweise mit der Druckleitung verbindbar sind.

Für das eingangs genannte Verfahren wird diese Aufgabe erfindungsgemäß dadurch gelöst, dass der Hydraulikdruck einen Progressivverteiler antreibt, welcher die Druckleitung des Hydraulikkreises wechselweise mit einer der beiden Antriebskammern verbindet.

Durch diese Lösung ist der Verschleiß gegenüber den oben genannten Schmierpumpen erheblich verringert, da keine mechanisch anfälligen Komponenten wie Rücksteilfedern oder Einwegkupplungen beim Förderkolben verwendet werden. Die Hin- und Herbewegung des Antriebskolbens wird vielmehr durch seine Ausgestaltung als doppelt wirkender Kolben und durch die wechselweise Druckbeaufschlagung der Antriebskammern des Antriebskolbens durch das Umschaltorgan sichergestellt. Die Verwendung eines hydraulischen Umschaltorgans, das selbsttätig hydraulisch arbeitet, stellt gegenüber den aus dem Stand der Technik bekannten mechanischen Lösungen eine lange Lebensdauer aufgrund des vergleichsweise geringen Verschleißes sicher.

Die erfindungsgemäße Lösung kann durch weitere, jeweils für sich vorteilhafte Maßnahmen weiter verbessert werden, wobei die einzelnen Maßnahmen beliebig miteinander kombiniert werden können.

Progressivverteiler sind beispielsweise aus der DE-C-34 16 041, der EP-A-31 38 21, der DE-A-29 17 863 und der DE-B-24 37 473 bekannt.

In einer weiteren Ausgestaltung kann der Antriebskolben von einem Steuerkolben des Progressiwerteilers gebildet sein, so dass sich eine kompaktere Bauform ergibt. Der als Antriebskolben verwendete Steuerkolben kann gegenüber den Steuerkolben vergrößert ausgestaltet sein, um größere Umschaltkräfte an den Förderkolben zu übertragen.

Ferner können wenigstens zwei im Betrieb des Progressivverteilers wechselweise mit der Druckleitung des Hydraulikkreises verbindbare Anschlussleitungen zu den Antriebskammern des Antriebskolbens geführt sein. Weist der Progressivverteiler weitere Ausgänge auf, so münden diese vorzugsweise in einer Rücklaufleitung des Hydraulikkreises. Zwischen die Anschlussleitungen des Umschaltorgans und die Antriebskammern kann vorzugsweise wenigstens ein hydraulisch betätigbares Umschaltventil geschaltet sein, das in einer ersten Betriebsstellung die Druckleitung mit der einen Antriebskammer und die Rückleitung mit der anderen Antriebskammer sowie in einer zweiten Betriebsstellung die Druckleitung mit der anderen Antriebskammer und die Rückleitung mit der einen Antriebskammer verbindet.

In einer weiteren Ausgestaltung des Progressivverteilers können mehrere selbsttätige, hydraulisch betätigbare Umschaltventile vorgesehen sein. Die Umschaltventile weisen Steuerleitungen auf, die jeweils einerseits in einen Anschluss an die Druckleitung und andererseits in Antriebskammern eines Umschaltventils münden.

Die Auslässe des Progressivverteilers sind nach außerhalb des Umschaltorgans geführt und münden im angeschlossenen Zustand beispielsweise in einen Anschluss an eine vorzugsweise druckfreie oder druckreduzierte Rückleitung des Hydraulikkreises. Die Druckbeaufschlagung einer Steuerleitung führt in Abhängigkeit von der Betriebsstellung eines Umschaltventils jeweils zu einer Änderung der Betriebsstellung eines anderen Umschaltventils: Das wenigstens eine Umschaltventil kann als hydraulisch betätigtes Mehrwegeventil, insbesondere als Kolbenventil mit einem Steuerkolben ausgestaltet sein. Bevorzugt weist der als Umschaltorgan in der selbsttätigen Schmierpumpe vorgesehene Progressiwerteiler wenigstens drei Steuerkolben auf, um eine ausreichende Betriebssicherheit zu gewährleisten.

Der Progressivverteiler kann in einer weiteren Ausgestaltung wenigstens ein Druckbegrenzungsventil mit einem vorbestimmten Mindestschaltdruck aufweisen. Das Druckbegrenzungsventil öffnet sich, wenn der Hydraulikdruck den Mindestschaltdruck überschreitet. Dies geschieht insbesondere bei Schlagwerkzeugen einmal in einem Betriebszyklus des Schlagwerkzeugs, wenn durch ein periodisch betätigtes Wechselventil im Hydraulikkreis der Maschine der Hydraulikdruck erhöht wird, um die Schlagwerkzeuge anzutreiben. Das Druckbegrenzungsventil kann insbesondere in den Steuerleitungen wenigstens eines Umschaltventils angeordnet sein.

Die Hin- und Herbewegung des doppelt wirkenden Antriebskolben führt vorteilhafterweise zu einer Hin- und Herbewegung des Förderkolbens, mit der dieser selbsttätig Schmierstoff aus einem Schmierstoffvorrat ansaugen kann und sich eine Druckbeaufschlagung des Schmierstoffvorrats durch verschleißanfällige Federsysteme erübrigt. Insbesondere können der Antriebskolben und der Förderkolben beispielsweise durch eine Kolbenstange miteinander mechanisch zwangsgekoppelt sein.

Um die vom Förderkolben an die wenigstens eine Schmierstelle abgegebene Schmierstoffmenge pro Zeiteinheit zu verändern, kann in einer verfahrensmäßigen Ausgestaltung der Erfindung der Volumenstrom des Hydraulikkreises verändert werden. Dies kann in der selbsttätigen Schmierpumpe beispielsweise durch Anordnung einer verstellbaren Drossel in dem Hydraulikkreis realisiert sein. Die Drossel kann in einer vorteilhaften Ausgestaltung in den Hydraulikkreis schaltbar sein. Die Drossel kann in einer Rücklaufleitung des Umschaltorgans, also in Reihe zum Umschaltorgan, oder in einer Bypassleitung, die also parallel zum Umschaltorgan verläuft, geschaltet sein. Selbstverständlich können auch zwei oder mehr Drosseln, von denen eine in der Rücklaufleitung und die andere in der Bypassleitung angeordnet ist, verwendet werden, was allerdings aufwendiger ist. Durch diese Maßnahme lässt sich auf konstruktiv einfache Weise die Schmierstoffabgabe verändern, ohne dass komplizierte bauliche Maßnahmen im Bereich des Förderkolbens notwendig sind.

Die Schmierpumpe kann ferner einen Schmierstoffbehälter aufweisen, der den Schmierstoffvorrat aufnimmt. Der Schmierstoffbehälter ist als eine wiederholt austauschbare Kartusche ausgestaltet. Die Kartusche kann in einer vorteilhaften Ausgestaltung an der selbsttätigen Schmierpumpe angeordnet sein. Bei längerer Betriebsdauer ist somit ein aufwändiges Befüllen des Schmierstoffbehälters unnötig, da lediglich die Kartusche ausgewechselt werden muss, wenn der Schmierstoffvorrat erschöpft ist.

Die Kartusche kann in einer weiteren vorteilhaften Ausgestaltung mit einer von außen zugänglichen, verschileßbaren Befüllleitung versehen sein.

Der Schmierstoffvorrat kann über eine Ansaugleitung mit der Förderkammer verbunden sein, wobei vorzugsweise die Förderkammer in Schwerkraftrichtung unterhalb des Schmierstoffvorrats angeordnet ist, so dass die Schwerkraft unterstützend beim Nachströmen von Schmierstoff in die Förderkammer wirkt. Ein Rückströmen von Schmierstoff aus der Förderkammer in den Schmierstoffvorrat bei Druckbeaufschlagung der Förderkammer kann vermieden werden, wenn gemäß einer weiteren vorteilhaften Ausgestaltung ein Rückschlagventil in der Ansaugleitung zwischen der Förderkammer und dem Schmierstoffvorrat angeordnet ist.

Ein Verschmutzen der selbsttätigen Schmierpumpe kann durch eine Filtereinrichtung in der Druckleitung vor dem Umschaltorgan erreicht werden. Eine Blendeneinrichtung in der Druckleitung begrenzt vorteilhaft den maximalen Volumenstrom durch das Umschaltorgan.

In einer weiteren vorteilhaften Ausgestaltung kann eine drosselbar oder verschließbar ausgestaltete Bypassleitung zum Umschaltorgan vorgesehen sein, welche von der Druckleitung zur Rücklaufleitung durch einen Pumpenblock geführt ist. Der Pumpenblock ist vorzugsweise ein Massivkörper. Die Bypassleitung kann im Winter zur Beheizung der selbsttätigen Pumpe verwendet werden, wenn die üblicherweise aufgeheizte Hydraulikflüssigkeit durch den Pumpenblock geleitet wird.

Schließlich können alle hydraulischen Anschlüsse der selbsttätigen Pumpe an einer Anschlussplatte zusammengefasst sein, die mit den Anschlüssen einer maschinenseitigen Anschlussplatte nach Art einer Fluid-Steckverbindung druckdicht verbunden werden kann.

Im Folgenden wird die Erfindung anhand mehrerer Ausführungsformen der Erfindung mit Bezug auf die Zeichnungen beispielhaft näher erläutert.

Es zeigen:
- Fig. 1: ein Fluidschaltbild einer ersten Ausführungsform einer erfindungs- gemäßen selbsttätigen Schmierpumpe insbesondere für Schlag- werkzeuge;
- Fig. 2: eine schematische Schnittdarstellung von Teilen einer weiteren Ausführungsform derselben erfindungsgemäßen Schmierpumpe in einer ersten Betriebsstellung;
- Fig. 3: die Ausführungsform der Fig. 2 in einer zweiten Betriebsstellung;
- Fig. 4: eine schematische Schnittdarstellung von Teilen einer weiteren Ausführungsform der erfindungsgemäßen selbsttätigen Schmier- pumpe;
- Fig. 5: eine schematische Seitenansicht mit Freischnitten einer weiteren Ausführungsform der erfindungsgemäßen selbsttätigen Schmier- pumpe;
- Fig. 6: eine zweite Betriebsstellung eines Elementes der Fig. 5.

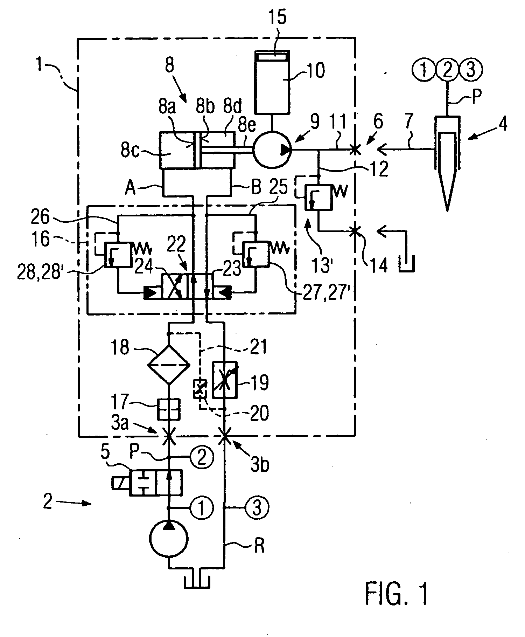

Zunächst wird der Aufbau einer erfindungsgemäß ausgestalteten selbsttätigen Schmierpumpe anhand der Ausführungsform der Fig. 1 erläutert.

Die selbsttätige Schmierpumpe 1 ist mit ihren Anschlussleitungen P, R an einen Hydraulikkreis 2 einer Baumaschine (nicht gezeigt) anschließbar ausgestaltet, beispielsweise über als Schnellkupplungen ausgebildete Anschlüsse 3a und 3b. Der Anschluss 3a zeigt dabei den Anschluss an die Druckleitung, in Fig. 1 ebenfalls mit P bezeichnet, des baumaschinenseitigen Hydraulikkreises, der Anschluss 3b zeigt den Anschluss an die im Wesentlichen druckfreie Rückleitung, in Fig. 1 ebenfalls mit R bezeichnet, des Hydraulikkreises.

Ist die Baumaschine beispielsweise mit einem hydraulischen Schlagwerkzeug 4, wie einem Hydraulikhammer, versehen, so wird die Druckleitung P entweder konstant oder, wie in Fig. 1 gezeigt, über ein periodisch betätigtes Wechselventil 5 periodisch mit Druck beaufschlagt, um das Schlagwerkzeug 4 entsprechend periodisch anzutreiben. Das Schlagwerkzeug 4 kann alternativ an unterschiedlichen Stellen mit dem Hydraulikkreis 2 verbunden sein, wie dies in Fig. 1 schematisch mit den Bezugszeichen ①, ② und ③ dargestellt ist. Ferner kann das Wechselventil 5 auch in der Rückleitung R angeordnet sein.

Die selbsttätige Schmierpumpe 1 ist ferner mit einem Schmierstoffauslass 6 versehen, an die eine zu einer Schmierstelle führende Schmierleitung 7 angeschlossen werden kann. Insbesondere kann als Schmierstelle das Schlagwerkzeug 4 vorgesehen sein.

Die selbsttätige Schmierpumpe 1 ist mit einem doppelt wirkenden Antriebskolben 8 versehen, welcher als Antrieb für eine Förderpumpe 9 dient. An seinen beiden Seiten ist der Antriebskolben 8 mit Antriebsflächen 8a, 8b versehen, die jeweils an Antriebskammern 8c, 8d grenzen. Die Förderpumpe 9 fördert Schmierstoff aus einen Schmierstoffvorrat 10 über eine Abgabeleitung 11 zum Schmierstoffauslass 6. Ein Abzweig 12 von der Abgabeleitung 11 kann mit einem Druckbegrenzungsventil 13 versehen sein, welches zu einem weiteren Anschluss 14 führt, über den bei Überschreiten eines vorbestimmten Schmierdruckes in der Abgabeleitung 11 Schmierstoff abgeleitet werden kann. Der Schmierstoffvorrat kann mit einem Folgekolben 15 versehen sein, um das Ansaugen von Luft durch die Förderpumpe 9 zu vermeiden.

Die selbsttätige Schmierpumpe 1 ist ferner mit einem hydraulisch betätigbaren Umschaltorgan 16 versehen, durch welches zwei zu den Antriebskammern 8c und 8d des doppelt wirkenden Antriebskolben 8 führende Schaltleitungen A, B wechselweise mit dem Anschluss 3a bzw. der Anschluss- oder Druckleitung P oder dem Anschluss 3b bzw. der Anschluss- oder Rückleitung R verbunden sind. Die Schaltleitungen A, B sind hierzu über das Umschaltorgan 16 mit der Druckleitung P und der Rückleitung R des Hydraulikkreises 2 verbunden, wenn die selbsttätige Schmierpumpe 1 an den Hydraulikkreis 2 angeschlossen ist.

In der Druckleitung P ist zwischen das Umschaltorgan 16 und den Anschluss 3a eine Blende 17 zur Begrenzung des durch das Umschaltorgan strömenden Volumenstroms an Hydraulikflüssigkeit sowie eine Filtereinheit 18 angeordnet. In der Rückleitung R, wahlweise auch in der Druckleitung P hinter der Filtereinheit 18, ist eine verstellbare Drossel 19 angeordnet. Zusätzlich zur oder anstelle der Drossel 19 kann auch eine Drossel 20 in einer zum Umschaltorgan 16 parallelen Bypassleitung 21 zwischen den Anschlussleitungen angeordnet sein. Die Bypassleitung 21 führt vorzugsweise durch einen massiv ausgebildeten Pumpenkörper und kann zur Vorwärmung der selbsttätigen Schmierpumpe 1 verwendet werden. Für diese Anwendung kann anstelle der Drossel 20 auch ein einfaches Schaltventil verwendet werden.

In der Fig. 1 ist gezeigt, dass das Umschaltorgan 16 ohne Energiezufuhr von außen, lediglich durch den Hydraulikkreis 2 angetrieben ausgestaltet ist. Beispielsweise weist das Umschaltorgan 16 ein hydraulisch betätigtes Umschaltventil 22 auf, das, wie in Fig. 1 gezeigt ist, als hydraulisch betätigtes Mehrwegeventil, insbesondere als 4/2-Ventil, ausgestaltet sein kann. In einer ersten Betriebsstellung 23 verbindet das Umschaltventil die Schaltleitung A mit der Druckleitung P und die Schaltleitung B mit der Rückleitung R, so dass die Antriebskammer 8c mit dem Hydraulikdruck im Hydraulikkreis 2 beaufschlagt ist und sich der Antriebskolben 8 in Richtung der anderen Antriebskammer 8d bewegt. In einer zweiten Betriebsstellung 24 ist die Schaltleitung A mit der Rückleitung R und die Schaltleitung B mit der Druckleitung P verbunden. In der zweiten Betriebsstellung ist also bei an den Hydraulikkreis 2 angeschlossener selbsttätiger Schmierpumpe 1 die Antriebskammer 8d mit dem Hydraulikdruck im Hydraulikkreis 2 beaufschlagt und der Antriebskolben 8 bewegt sich in Richtung der einen Antriebskammer 8c.

Das Umschaltventil 22 wird durch den Druck in zwei Steuerleitungen 25, 26 betätigt, die parallel zu den Schaltleitungen A, B von diesen jeweils zum Umschaltventil 22 zurückgeführt sind.

In der Steuerleitung 25 ist als Schaltmittel 27 ein Druckbegrenzungsventil 27' und in der Steuerleitung 26 als Schaltmittel 28 ebenfalls ein Druckbegrenzungsventil 28' angeordnet. Die Schaltmittel 27, 28 stellen sicher, dass eine Umschaltung der Betriebsstellung 22, 23 im Umschaltventil 22 stattfindet, wenn in einer der jeweiligen Steuerleitung 25, 26 ein vorbestimmter Mindestdruck überschritten ist. Da die Schaltleitungen A, B bei Verbindung mit der Druckleitung P, entweder mit dem Hydraulikdruck beaufschlagt oder, bei Verbindung mit der Rückleitung R, im Wesentlichen druckfrei sind, bewirken die Schaltmittel 27, 28 ein Umschalten der Betriebsstellung erst dann, wenn der sich periodisch ändernde Hydraulikdruck P den vorbestimmten Mindestschaltdruck der Druckbegrenzungsventile überschritten hat.

Aus diesem Aufbau des Umschaltorgans 16 ergeben sich folgende Funktionen:

Ausgehend von der in Fig. 1 ersten Betriebsstellung 23 baut sich der Druck z.B. nach einem entsprechenden Umschalten des Wechselventils 5 in der Druckleitung P auf, bis der vorbestimmte Mindestschaltdruck in der in dieser Betriebsstellung mit der Druckleitung P verbundenen Schaltleitung A überschritten ist. Dann öffnet sich das Druckbegrenzungsventil 28', die Steuerleitung 26 wird mit dem Hydraulikdruck beaufschlagt und das Umschaltventil 22 schaltet in die zweite Betriebsstellung 24 um. In der zweiten Betriebsstellung ist die Schaltleitung B mit der Druckleitung P und die Schaltleitung A mit der Rückleitung R verbunden. Baut sich nun beim nächsten Umschalten des Schaltventils 5 der Hydraulikdruck in der Schaltleitung B auf, öffnet sich das Druckbegrenzungsventil 27', die Steuerleitung 25 wird mit dem Hydraulikdruck beaufschlagt und das Schaltventil 22 schaltet wieder zurück in die erste Betriebstellung 23, wie sie in Fig. 1 gezeigt ist. Auf diese Weise wird wechselweise einmal die Schaltleitung A mit der Druckleitung P und der Rückleitung R und einmal die Druckleitung B mit der Rückleitung R und der Druckleitung P verbunden. Der doppelt wirkende Antriebskolben 8 bewegt sich infolge dieser kontinuierlichen Umschaltung hin und her und treibt über die Kolbenstange 8e die Förderpumpe 9 an.

Die obige Ausgestaltung funktioniert in der beschriebenen Art und Weise auch, wenn in der Druckleitung P ein konstanter Hydraulikdruck herrscht und das Schaltventil 5 weggelassen ist. In diesem Fall führen die Bewegungen der Schaltkolben zu alternierenden Druckverhältnissen und somit zum Öffnen und Schließen des Druckbegrenzungsventils 27'.

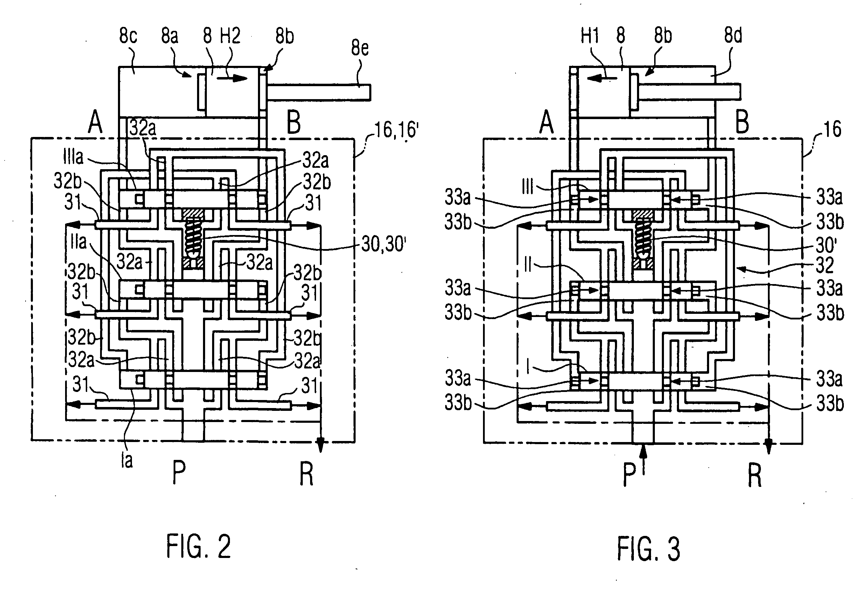

Fig. 2 und 3 zeigen eine schematische Schnittdarstellung einer weiteren Ausführungsform des Umschaltorgans 16 in einer schematischen Schnittdarstellung. Es werden dieselben Bezugszeichen wie in Fig. 1 verwendet. In der Fig. 2 befindet sich das Umschaltorgan 16 in der ersten Betriebsstellung, in der die Schaltleitung A und die Antriebskammer 8c mit der Druckleitung P und die Schaltleitung B und die Antriebskammer 8d mit der Rückleitung R verbunden sind. Fig. 3 zeigt die Ausführungsform der Fig. 2 in der zweiten Betriebsstellung, in der die Schaltleitung B mit der Druckleitung P und die Schaltleitung A mit der Rückleitung R verbunden ist. Das Umschaltorgan 16 der Fig. 2 und 3 kann anstelle des in Fig. 1 gezeigten Umschaltorgans verwendet werden.

Bei der Ausführungsform der Fig. 2 und 3 ist das Umschaltorgan 16 als Progressiwerteiler mit drei Steuerkolben I, II und III sowie einem als Druckbegrenzungsventil 30' ausgebildeten Schaltmittel 30 ausgestaltet, das in seiner Funktion den Schaltmitteln 27, 28 der Ausführungsform der Fig. 1 entspricht. Bis auf die beiden mit den Schaltleitungen A und B verbundenen Ausgängen des Umschaltorgangs 16 sind sämtliche Auslässe 31 des Umschaltorgans 16 mit der Rückleitung R verbunden.

Jedem Steuerkolben I, II, III sind wenigstens zwei Paar von Steuerleitungen 32 und wenigstens ein Paar von Auslässen 31 zugeordnet. Dabei sind erste Abschnitte 32a eines ersten Paares von Steuerleitungen 32 durch den den jeweiligen Steuerkolben I, II, III aufnehmenden Zylinder Ia, IIa, IIIa hindurchgeführt und können durch wenigstens zwei Kolbenabschnitte 33a des jeweiligen Steuerkolbens geöffnet und geschlossen werden. Die ersten Abschnitte 32a münden an ihrem einen Ende jeweils in der Druckleitung P und gehen an ihren anderen Ende in zweite Abschnitte 32b der Steuerleitungen über. Die zweiten Abschnitte 32b münden jeweils an den Stirnseiten der Steuerkolben I, II, III in dort angeordneten Antriebskammern 33b. Folglich verbindet jede Steuerleitung 32 eine Antriebskammer 33b eines Steuerkolbens I, II, III über einen Kolbenabschnitt 33a eines anderen Steuerkolbens mit der Druckleitung P.

Bei dem Ausführungsbeispiel der Fig. 2 und 3 sind die Steuerleitungen dabei wie folgt angeordnet:

Die in den Antriebskammern 33b des Steuerkolbens II mündenden Steuerleitungen 32 sind über den Steuerkolben I mit der Druckleitung P verbunden (Fig. 2). Die in den Antriebskammern 33b des Steuerkolbens III mündenden Steuerleitungen sind über die Kolbenabschnitte 33a des Steuerkolbens II geführt. Die in den Antriebskammern 33b des Steuerkolbens I mündenden Steuerleitungen sind über die Kolbenabschnitte 33a des Steuerkolbens III geführt. Bis auf die vom Steuerkolben I über den Steuerkolben III geführten Steuerleitungen liegen die Steuerleitungen 32 jeweils auf einer Seite der symmetrisch ausgestalteten Steuerkolben.

Die Auslässe 31 verlaufen ebenfalls über die Kolbenabschnitte 33a parallel zu den ersten Abschnitten 32a der Steuerleitungen 32 und münden wie diese in den zweiten Abschnitt 32b der Steuerleitungen. Die Kolbenabschnitte 33a sind dabei jeweils so bemessen, dass sie entweder sowohl den ihnen zugeordneten Auslass 31 als auch den ihnen zugeordneten ersten Abschnitt 32a gleichzeitig oder nur einen hiervon verschließen. Da jeweils ein Paar von Steuerleitungen 32 zu den Antriebskammern 33b an den Stirnflächen des zugeordneten Steuerkolbens I, II, III führt, wird jeder Steuerkolben in eine seiner beiden Endlagen verschoben, sobald eine Steuerleitung 32 dieses Paars mit der Druckleitung P und die andere Steuerleitung 32 dieses Paars mit der Rückleitung R verbunden ist.

In den Endlagen des Steuerkolbens ist jeweils ein Auslass geöffnet und gleichzeitig der zu diesem Auslass parallele Abschnitt 32a einer Steuerleitung durch den einen Kolbenabschnitt 33a verschlossen, so dass der zweite Abschnitt 32b dieser Steuerleitung mit der Rückleitung R verbunden ist. Außerdem ist der erste Abschnitt 32a der anderen, durch den Steuerkolben führende Steuerleitung geöffnet, während gleichzeitig der an diesem Abschnitt 32a parallele Auslass 31 vom anderen Kolbenabschnitt 33a verschlossen ist, so dass die geöffnete Steuerleitung mit der Druckleitung P verbunden ist. Somit weist jeder Steuerkolben I, II, III eine erste Betriebsstellung und eine zweite Betriebsstellung auf, die seinen beiden Endlagen im Zylinder Ia, IIa, IIIa entsprechen: In der ersten Betriebsstellung ist die eine Antriebskammer des über die Steuerleitung 32 verbundenen Steuerkolbens mit dem Hydraulikdruck beaufschlagt und die andere Antriebskammer ist mit der Rückleitung R über den Auslass 31 verbunden. In der zweiten Betriebsstellung ist die andere Antriebskammer dieses Steuerkolbens mit dem Hydraulikdruck beaufschlagt und die andere Antriebskammer mit der Rückleitung R verbunden. Entsprechend werden beim Hin- und Herschalten zwischen die mit den Steuerleitungen verbundenen Antriebskammern eines Steuerkolbens wechselweise in den beiden Betriebsstellungen mit der Druckleitung P verbunden.

Das Druckbegrenzungsventil 30 ist vor den beiden Steuerleitungen 32 durch den Steuerkolben III angeordnet und so ausgebildet, dass es sich erst bei Überschreiten eines vorbestimmten Hydraulikdruckes in der Druckleitung P öffnet und je nach Stellung des Steuerkolbens III eine der Antriebskammern 33a des Steuerkolbens I mit der Druckleitung P verbindet.

Die Funktion des Umschaltorgans 16 der Fig. 2 und 3 ist wie folgt:

In Fig. 2 ist die Schaltleitung A des Antriebskolbens 8 über Antriebskammern 33b des Steuerkolbens III und den Steuerkolben II mit der Druckleitung P verbunden. Der Antriebskolben 8 ist entsprechend in die in Fig. 2 rechte Endstellung verschoben, da die Antriebskammer 8c mit dem Hydraulikdruck beaufschlagt ist. Über die Kolbenstange 8e wird die Bewegung des Antriebskolbens 8 an die Förderpumpe 9 (in Fig. 2 und 3 nicht gezeigt) übertragen. Die Betriebsstellung der Fig. 2 entspricht also der Betriebsstellung 23 der Fig. 1.

Wird nun durch Umschalten des Hydraulikventils 5 (Fig. 1) die Druckleitung P mit Druck beaufschlagt, steigt der Druck in der Druckleitung P solange an, bis der vorbestimmte Mindestschaltdruck des Druckbegrenzungsventils 30 erreicht ist und sich dieses öffnet. Bei geöffnetem Druckbegrenzungsventil 30 ist die in Fig. 2 linke Steuerleitung 32 des Steuerkolbens III mit der in Fig. 2 rechten Antriebskammer 33b des Steuerkolbens I verbunden. Der Steuerkolben I wird an seiner rechten Stirnfläche mit dem Hydraulikdruck in der Druckleitung P beaufschlagt und bewegt sich in seine linke Endstellung, in der er die rechte Steuerleitung 32 mit der rechten Antriebskammer 33b des Steuerkolbens II verbindet, während er gleichzeitig die linke Antriebskammer 33b des Steuerkolbens II über einen Auslass 31 mit der Rückleitung R verbindet. Folglich bewegt sich der Steuerkolben II von der in Fig. 2 dargestellten rechten Endlage in die linke Endlage, sobald der Steuerkolben I in die ebenfalls linke Endlage verschoben ist.

Der Steuerkolben II wiederum verbindet in der linken Endlage die rechte Steuerleitung 32 mit der rechten Antriebskammer 33b des Steuerkolbens III und damit die Schaltleitung B mit der Druckleitung P. Gleichzeitig schließt der Steuerkolben II die linke Steuerleitung 32 und verbindet die linke Antriebskammer 33b des Steuerkolbens III und damit die Schaltleitung A mit dem ihm zugeordneten Auslass 31. Somit kann sich der Antriebskolben 8 von der einen, rechten Endstellung in die andere, linke Endstellung bewegen.

Am Ende dieses Umschaltvorgangs sind sämtliche Steuerkolben I, II, III und der Antriebskolben 8 in ihre linke Endstellung gefahren, wie dies in Fig. 3 gezeigt ist. Diese Betriebsstellung entspricht der Betriebsstellung 24 der Fig. 1. Die Hin- und Herbewegung des Antriebskolbens ist in den Fig. 2 und 3 symbolhaft durch die Pfeile H1 und H2 angedeutet.

Steigt beim nächsten Umschaltzyklus des Schaltventils 5 der Druck in der Druckleitung P wieder über den Mindestschaltdruck an, so öffnet sich das Druckbegrenzungsventil 30 erneut und die Steuerkolben I, II, III bewegen sich in dieser Reihenfolge sukzessive von ihrer in Fig. 3 gezeigten linken Endstellung in die in Fig. 2 gezeigte rechte Endstellung bis die Antriebskammer 8c mit der Druckleitung P verbunden ist und die Antriebskolben 8 in Richtung H2 ebenfalls in seine rechte Endstellung verfahren ist. Damit ist ein Umschaltvorgang und ein Antriebszyklus beim doppelt wirkenden Antriebskolben 8 beendet.

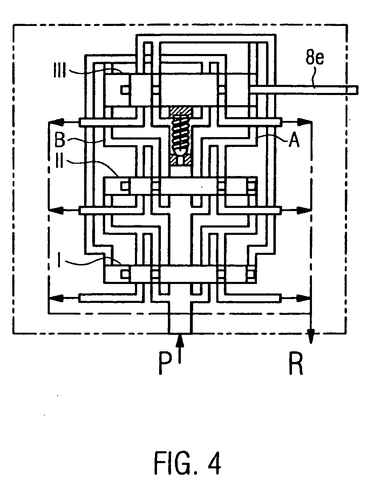

Fig. 4 zeigt in einer schematischen Schnittdarstellung eine weitere Ausführungsform des Umschaltorgans 16. Bei dieser Ausführungsform werden dieselben Bezugszeichen wie bei den vorangegangenen Ausführungsformen verwendet, soweit die Funktion und der Aufbau der Elemente übereinstimmen.

Im Unterschied zu der Ausführungsform der Fig. 2 und 3 dient bei der Ausführungsform der Fig. 4 der Steuerkolben III gleichzeitig als Antriebskolben, der über die Kolbenstange 8e die Förderpumpe 9 (vgl. Fig. 1) antreibt. Der Steuerkolben III kann, wie in Fig. 4 dargestellt, mit einem größeren Querschnitt als die übrigen Steuerkolben ausgebildet sein, um größere Antriebskräfte zu erzeugen. Anstelle des Steuerkolbens III kann auch einer der anderen Steuerkolben als Antriebskolben dienen.

Im Übrigen entsprechen die Funktion und der Aufbau der Ausführungsform der Fig. 4 der Funktion und dem Aufbau der Ausführungsform der Fig. 2 und 3.

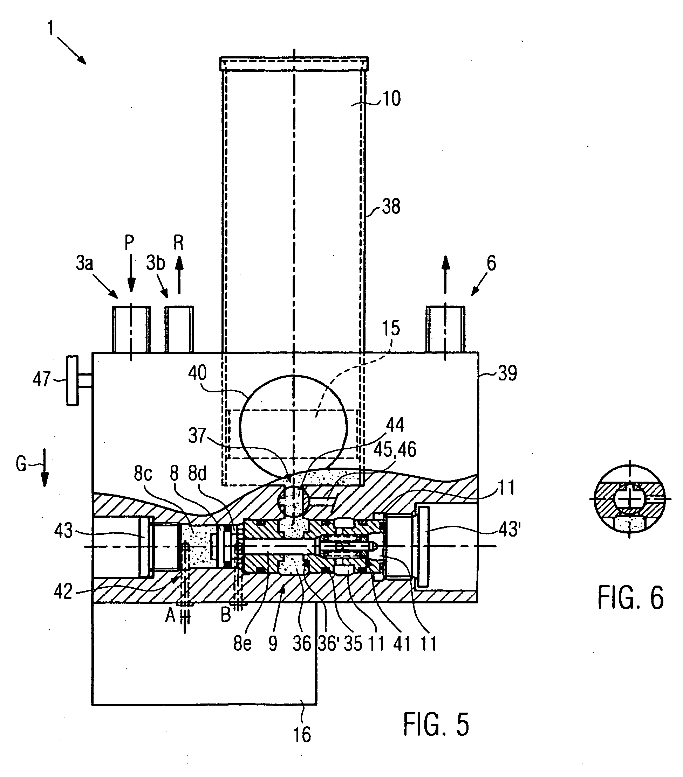

In Fig. 5 ist eine weitere Ausführungsform einer selbsttätigen Schmierpumpe 1 gezeigt, wobei dieselben Bezugszeichen wie in den vorangegangenen Figuren verwendet sind, soweit sie in ihrem Aufbau oder ihrer Funktion ähnlich sind.

Die selbsttätige Schmierpumpe 1 der Fig. 5 ist mit einem Umschaltorgan 16 versehen, das gemäß einer der vorangegangenen Ausführungsformen aufgebaut sein kann.

Der Antriebskolben 8, dessen beide Kammern 8c, 8d mit den Schaltleitungen A, B vom Umschaltorgan 16 verbunden sind, ist über die Kolbenstange 8e mit dem einfach oder doppelt wirkenden Förderkolben 35 der Förderpumpe bewegungsübertragend verbunden. Der Förderkolben 35 kann insbesondere, wie in Fig. 5 zu erkennen ist, einstückig von der Kolbenstange 8e geformt sein.

Die Förderpumpe 9 weist ferner eine Förderkammer 36 auf, die über eine Ansaugleitung 37 mit dem Schmierstoffvorrat 10 verbunden ist. Der Teil 36' der Förderkammer 36, der mit dem Förderkolben dicht abschließt und zur Schmierstoffleitung 11 führt, dient als Dosierkammer, welche die pro Hub des Förderkolbens 35 zur Schmierstelle geförderte Schmierstoffmenge bestimmt. Der Schmierstoffvorrat 10 ist in einer wiederholt auswechselbaren Kartusche 38 aufgenommen, die an ein Pumpengehäuse 39 dichtend angesetzt ist.

Die Endstellung des Folgekolbens 15 bei entleerter oder nahezu entleerter Kartusche 38 lässt sich über ein Sichtfenster 40 in der Kartusche 38 oder im Pumpengehäuse 39 ablesen.

Der Schmierstoffvorrat 10 ist in Schwerkraftrichtung G oberhalb der Förderkammer 36 angeordnet, so dass die Schwerkraft bei der Befüllung der Förderkammer 36 mit Schmierstoff aus dem Schmierstoffvorrat unterstützend mitwirkt. Außerdem saugt der Förderkolben 35 aufgrund seiner hin- und hergehenden Bewegung des doppelt wirkenden Antriebskolbens 8 selbsttätig Schmierstoff aus dem Schmierstoffvorrat 10 an. Ein Rückfluss von Schmierstoff aus der Dosierkammer 36' in den Schmierstoffvorrat ist ausgeschlossen, da der Förderkolben 35 dichtend in die Dosierkammer 36' eintaucht.

Der Förderkolben 35 drückt den Schmierstoff aus der Dosierkammer 36' durch ein Rückschlagventil 41 in Richtung des Schmierstoffauslasses 6.

Der Antriebskolben 8 und die Förderpumpe 9, vorzugsweise mitsamt dem Rückschlagventil 41, sind in eine vorzugsweise einzige Bohrung 42 des Pumpengehäuses 39 eingesetzt. Die Bohrung 42 weist an wenigstens einem Ende, vorzugsweise wie in Fig. 5 gezeigt, an ihren beiden Enden Verschlussschrauben 43 auf, die zu Wartungszwecken einfach entfernt werden können und den Zugriff auf den Antriebskolben 8 oder die Förderpumpe 9 mit gegebenenfalls dem Rückschlagventil 41 erlauben.

In der Ansaugleitung 37 ist ein Drei-Wege-Ventil 44 beispielsweise in Form eines Kugelhahns angeordnet. Das Drei-Wege-Ventil 44 ist von außerhalb der selbsttätigen Schmierpumpe betätigbar ausgebildet und verbindet in der in Fig. 5 gezeigten Stellung den Schmierstoffvorrat mit der Förderkammer 36. Das Drei-Wege-Ventil 44 ist in die in Fig. 6 gezeigte Stellung überführbar ausgestaltet, in der die Ansaugleitung 37 mit einer Befüllleitung 45 verbunden ist, so dass bei Bedarf die Kartusche 38 über einen von außen zugänglichen Befüllanschluss 46 befüllt werden kann.

Bei versehentlich leer geförderter Kartusche besteht nach Kartuschenwechsel die Möglichkeit, durch manuellen Druck auf die in Kartuschen übliche Folgeplatte und Lösen der Entlüftungsschraube den Saugkanal 37 zu entlüften und mit Fett zu befüllen.

Schließlich weist die selbsttätige Schmierpumpe 1 gemäß der Ausführungsform der Fig. 5 ein Stellelement 47 auf, mit dem die Drossel 19, 20 (Fig. 1) betätigt, der Hydraulikstrom verändert und die Menge der pro Zeiteinheit von der selbsttätigen Schmierpumpe abgegebenen Schmierstoffmenge eingestellt werden kann.

Die oben beschriebenen Ausführungsformen können weiter modifiziert werden. Beispielsweise kann auf das Druckbegrenzungsventil verzichtet werden, wenn wenigstens ein weiterer Steuerkolben entsprechend den Steuerkolben I, II verwendet wird.

Ferner kann anstelle der in Fig. 4 gezeigten Anschlüsse, die einzeln an entsprechenden Leitungen anschließbar sind, eine Anschlussplatte vorgesehen sein, an welcher sämtliche Fluidanschlüsse zusammengefasst sind. Diese Anschlussplatte bildet Teil eines Fluidsteckers, mit dem die selbsttätige Schmierpumpe in einem Schritt an die Maschine angeschlossen werden kann.

## Patentansprüche

1. Selbsttätige Schmierpumpe (1), die an eine Druckleitung (P) eines Hydraulikkreises (2) mit wiederholt ansteigendem oder konstantem Hydraulikdruck einer Maschine, wie einer Baumaschine mit einem hydraulischen Schlagwerkzeug (4), anschließbar ausgestaltet ist, mit einem vom Hydraulikkreis antreibbar ausgebildeten Antriebskolben (8) und mit einem mit dem Antriebskolben bewegungsübertragend verbundenen Förderkolben (35), der an eine mit Schmierstoff befüllbare und mit wenigstens einem Schmierstoffauslass (6) der selbsttätigen Schmierpumpe verbundene Förderkammer (36) grenzt, **dadurch gekennzeichnet, dass** der Antriebskolben (8) doppelt wirkend mit zwei Antriebskammern (8c, 8d) ausgestaltet ist und dass ein in den Hydraulikkreis (2) schaltbares und vom Hydraulikdruck betätigbares, einen Progressiwerteiler umfassendes Umschaltorgan (16) vorgesehen ist, durch welches im Betrieb die Antriebskammern (8c, 8d) wechselweise mit der Druckleitung (P) verbindbar sind.

2. Selbsttätige Schmierpumpe (1) nach Anspruch 1, **dadurch gekennzeichnet, dass** das Umschaltorgan wenigstens ein hydraulisch betätigbares Umschaltventil (22, I, II, III) aufweist, durch welches in einer ersten Betriebsstellung (23) die eine Antriebskammer (8c) mit der Druckleitung (P) und die andere Antriebskammer (8d) mit einer Rückleitung (R) und in einer zweiten Betriebsstellung (24) die eine Antriebskammer (8c) mit der Rückleitung (R) und die andere Antriebskammer (8d) mit der Druckleitung (P) verbunden ist.

3. Selbsttätige Schmierpumpe (1) nach Anspruch 2, **dadurch gekennzeichnet, dass** das Umschaltventil (22, I, II, III) wenigstens eine mit der Druckleitung (P) verbindbare Steuerleitung (25, 26, 32) aufweist und dass in der Steuerleitung (25, 26, 32) wenigstens ein Druckbegrenzungsventil (27', 28', 30) angeordnet ist.

4. Selbsttätige Schmierpumpe (1) nach einem der oben genannten Ansprüche, **dadurch gekennzeichnet, dass** der Progressivverteiler wenigstens drei Steuerkolben (I, II, III) aufweist.

5. Selbsttätige Schmierpumpe (1) nach Anspruch 4, **dadurch gekennzeichnet, dass** zwischen ein Paar Steuerleitungen (32) eines Steuerkolbens (I, II, III) und die Druckleitung (P) ein Druckbegrenzungsventil (30) geschaltet ist.

6. Selbsttätige Schmierpumpe (1) nach einem der Ansprüche 1 bis 5, **dadurch gekennzeichnet, dass** zwei Auslässe (A,B) des Progressivverteilers mit den Antriebskammern (8c, 8d) des Antriebskolbens (8) und die übrigen Auslässe (31) mit der Rückleitung (R) verbunden sind.

7. Selbsttätige Schmierpumpe (1) nach einem der Ansprüche 1 bis 6, **dadurch gekennzeichnet, dass** der Antriebskolben (8) von einem Steuerkolben (I, II, III) des Progressivverteilers gebildet ist.

8. Selbsttätige Schmierpumpe (1) nach einem der oben genannten Ansprüche 1 bis 6, **dadurch gekennzeichnet, dass** der Antriebskolben (8) und der Förderkolben (35) durch eine Kolbenstange (8e) miteinander gekoppelt sind.

9. Selbsttätige Schmierpumpe (1) nach einem der oben genannten Ansprüche, **dadurch gekennzeichnet, dass** parallel zum Umschaltorgan (16) eine verschließbare BypassLeitung (21) vorgesehen ist.

10. Selbsttätige Schmierpumpe (1) nach einem der oben genannten Ansprüche, **dadurch gekennzeichnet, dass** die Anschlüsse (3a, 3b, 6, 14) der selbsttätigen Schmierpumpe (1) an einer Adapterplatte zusammengefasst sind.

11. Hydraulisches Schlagwerkzeug (4) für eine Maschine mit eigenem wiederholt mit steigendem Hydraulikdruck beaufschlagbaren Hydraulikkreis (2), mit einer vom Hydraulikkreis betätigbaren Schmierpumpe (1), **dadurch gekennzeichnet, dass** die Schmierpumpe (1) nach einem der oben genannten Ansprüche ausgestaltet ist.

12. Verfahren zum Schmieren von wenigstens einer Schmierstelle (4) an Maschinen mit eigenem Hydraulikkreis (2), wobei ein Antriebskolben (8) vom wiederholt ansteigenden oder konstanten Hydraulikdruck in einer Druckleitung (P) des Hydraulikkreises hin und her bewegt und die Bewegung des Antriebskolbens (8) an einen mit dem Antriebskolben gekoppelten Förderkolben (35) übertragen wird und der Förderkolben Schmierstoff in Richtung der wenigstens einen Schmierstelle fördert, **dadurch gekennzeichnet, dass** der Hydraulikdruck einen Progressivverteiler antreibt, welcher die Druckleitung (P) des Hydraulikkreises wechselweise mit einer von zwei Antriebskammern (8c, 8d) des Antriebskolbens (8) verbindet.

13. Verfahren nach Anspruch 12, **dadurch gekennzeichnet, dass** die Verbindung der Druckleitung (P) von der einen zu der anderen Antriebskammer (8c, 8d) umgeschaltet wird, wenn der Hydraulikdruck einen vorbestimmten Mindestschaltdruck überschreitet.

## Claims

1. Automatic lubricating pump (1), which is designed for connection to a pressure line (P) of a hydraulic circuit (2) with repeatedly increasing or constant hydraulic pressure of a machine, such as a construction machine with a hydraulic striking tool (4), with a drive piston (8) configured to be driven by the hydraulic circuit, and with a feed piston (35) connected to the drive piston in a motion-transmitting manner, said feed piston bordering on a feed chamber (36) which can be filled with lubricant and which is connected to at least one lubricant outlet (6) of the automatic lubricating pump, **characterised in that** the drive piston (8) is configured double-acting with two drive chambers (8c, 8d), and **in that** a changeover member (16), which can be engaged in the hydraulic circuit (2) and operated by the hydraulic pressure and which comprises a progressive feeder, is provided, through which the drive chambers (8c, 8d) in operation can be alternately connected to the pressure line (P).

2. Automatic lubricating pump (1) according to Claim 1, **characterised in that** the changeover member has at least one hydraulically operable changeover valve (22, I, II, III), through which in a first operating position (23) the one drive chamber (8c) is connected to the pressure line (P) and the other drive chamber (8d) to a return line (R) and in a second operating position (24) one drive chamber (8c) is connected to the return line (R) and the other drive chamber (8d) to the pressure line (P).

3. Automatic lubricating pump (1) according to Claim 2, **characterised in that** the changeover valve (22, I, II, III) has at least one control line (25, 26, 32), which can be connected to the pressure line (P), and **in that** at least one pressure control valve (27', 28', 30) is arranged in the control line (25, 26, 32).

4. Automatic lubricating pump (1) according to one of the aforementioned claims, **characterised in that** the progressive feeder has at least three control pistons (I, II, III).

5. Automatic lubricating pump (1) according to Claim 4, **characterised in that** a pressure control valve (30) is connected between one pair of control lines (32) of a control piston (I, II, III) and the pressure line (P).

6. Automatic lubricating pump (1) according to one of the Claims 1 to 5, **characterised in that** two outlets (A, B) of the progressive feeder are connected to the drive chambers (8c, 8d) of the drive piston (8) and the other outlets (31) to the return line (R).

7. Automatic lubricating pump (1) according to one of the Claims 1 to 6, **characterised in that** the drive piston (8) is formed from a control piston (I, II, III) of the progressive feeder.

8. Automatic lubricating pump (1) according to one of the aforementioned Claims 1 to 6, **characterised in that** the drive piston (8) and the feed piston (35) are coupled together by a piston rod (8e).

9. Automatic lubricating pump (1) according to one of the aforementioned claims, **characterised in that** a closable bypass line (21) is provided in parallel to the changeover member (16).

10. Automatic lubricating pump (1) according to one of the aforementioned claims, **characterised in that** the connections (3a, 3b, 6, 14) of the automatic lubricating pump (1) are collected on an adapter plate.

11. Hydraulic striking tool (4) for a machine with its own hydraulic circuit (2), which can be repeatedly subjected to increasing hydraulic pressure, with a lubricating pump (1) operable by the hydraulic circuit, **characterised in that** the lubricating pump (1) is designed according to one of the aforementioned claims.

12. Method for lubricating at least one lubricating point (4) on machines with their own hydraulic circuit (2), wherein a drive piston (8) is moved to and fro by repeatedly increasing or constant hydraulic pressure in a pressure line (P) of the hydraulic circuit and the movement of the drive piston (8) is transferred to a feed piston (35) coupled to the drive piston, and said piston feeds lubricant in the direction of the at least one lubricating point, **characterised in that** the hydraulic pressure drives a progressive feeder (16) which connects the pressure line (P) of the hydraulic circuit alternately to one of the two drive chambers (8c, 8d) of the drive piston (8).

13. Method according to claim 12, **characterised in that** the connection of the pressure line (P) is switched from one drive chamber (8c, 8d) to the other when the hydraulic pressure exceeds a predetermined minimum switching pressure.

## Revendications

1. Pompe à lubrifiant automatique (1) qui est conçue pour pouvoir être raccordée à une conduite de pression (P) d'un circuit hydraulique (2) avec une pression hydraulique d'une machine, comme une machine de construction pourvue d'un outil de percussion hydraulique (4), qui augmente de manière répétée ou qui est constante, comprenant un piston d'entraînement (8) qui est conçu pour pouvoir être entraîné par le circuit hydraulique, et un piston d'alimentation (35) qui est relié au piston d'entraînement pour transmettre le mouvement et qui est voisin d'une chambre d'alimentation (36) apte à être remplie de lubrifiant et reliée à au moins une sortie de lubrifiant (6) de la pompe à lubrifiant automatique, **caractérisée en ce que** le piston d'entraînement (8) est à double action, avec deux chambres d'entraînement (8c, 8d), et **en ce qu'**il est prévu un organe de commutation (16) qui est apte à être monté dans le circuit hydraulique (2) et à être actionné par la pression hydraulique, qui comprend un distributeur progressif et grâce auquel les chambres d'entraînement (8c, 8d) peuvent être reliées en alternance à la conduite de pression (P), en fonctionnement.

2. Pompe à lubrifiant automatique (1) selon la revendication 1, **caractérisée en ce que** l'organe de commutation comporte au moins une soupape de commutation (22, I, II, III) à commande hydraulique grâce à laquelle, dans une première position de fonctionnement (23), une chambre d'entraînement (8c) est reliée à la conduite de pression (P) et l'autre chambre d'entraînement (8d) est reliée à une conduite de retour (R), et dans une seconde position de fonctionnement (24) une chambre d'entraînement (8c) est reliée à la conduite de retour (R) et l'autre chambre d'entraînement (8d) est reliée à la conduite de pression (P).

3. Pompe à lubrifiant automatique (1) selon la revendication 2, **caractérisée en ce que** la soupape de commutation (22, I, II, III) comporte au moins une conduite de commande (25, 26, 32) apte à être reliée à la conduite de pression (P), et **en ce qu'**il est prévu dans la conduite de commande (25, 26, 32) au moins une soupape de limitation de pression (27', 28', 30).

4. Pompe à lubrifiant automatique (1) selon l'une des revendications précédentes, **caractérisée en ce que** le distributeur progressif comporte au moins trois pistons de commande (I, II, III).

5. Pompe à lubrifiant automatique (1) selon la revendication 4, **caractérisée en ce qu'**une soupape de limitation de pression (30) est montée entre une paire de conduites de commande (32) d'un piston de commande (I, II, III) et la conduite de pression (P).

6. Pompe à lubrifiant automatique (1) selon l'une des revendications 1 à 5, **caractérisée en ce que** deux sorties (A, B) du distributeur progressif sont reliées aux chambres d'entraînement (8c, 8d) du piston d'entraînement (8), et les autres sorties (31) sont reliées à la conduite de retour (R).

7. Pompe à lubrifiant automatique (1) selon l'une des revendications 1 à 6, **caractérisée en ce que** le piston d'entraînement (8) est formé par un piston de commande (I, II, III) du distributeur progressif.

8. Pompe à lubrifiant automatique (1) selon l'une des revendications 1 à 6 précédentes, **caractérisée en ce que** le piston d'entraînement (8) et le piston d'alimentation (35) sont accouplés par une tige de piston (8e).

9. Pompe à lubrifiant automatique (1) selon l'une des revendications précédentes, **caractérisée en ce qu'**il est prévu, parallèlement à l'organe de commutation (16), une conduite de dérivation (21) apte à être fermée.

10. Pompe à lubrifiant automatique (1) selon l'une des revendications précédentes, **caractérisée en ce que** les raccordements (3a, 3b, 6, 14) de la pompe à lubrifiant automatique (1) sont réunies au niveau d'une plaque d'adaptateur.

11. Outil de percussion hydraulique (4) pour une machine ayant son propre circuit hydraulique (2) apte à être pressurisé de manière répétée par une pression hydraulique croissante, avec une pompe à lubrifiant (1) apte à être actionnée par le circuit hydraulique, **caractérisé en ce que** la pompe à lubrifiant (1) est conçue selon l'une des revendications précédentes.

12. Procédé pour lubrifier au moins un point de lubrification (4) sur des machines ayant leur propre circuit hydraulique (2), selon lequel un piston d'entraînement (8) est déplacé suivant un mouvement de va-et-vient par la pression hydraulique qui augmente de manière répétée ou constante dans une conduite de pression (P) du circuit hydraulique, et le mouvement du piston d'entraînement (8) est transmis à un piston d'alimentation (35) accouplé au piston d'entraînement et le piston d'alimentation amène le lubrifiant vers le ou les points de lubrification, **caractérisé en ce que** la pression hydraulique entraîne un distributeur progressif qui relie la conduite de pression (P) du circuit hydraulique en alternance à l'une des deux chambres d'entraînement (8c, 8d) du piston d'entraînement (8).

13. Procédé selon la revendication 12, **caractérisé en ce que** la liaison de la conduite de pression (P) passe de l'une à l'autre chambre d'entraînement (8c, 8c) quand la pression hydraulique dépasse une pression de manoeuvre minimale prédéfinie.
